# DEMANDE DE BREVET EUROPEEN

(11) **EP 2 796 702 A1**
(43) Date de publication de la demande: **29.10.2014**
(21) Numéro de dépôt: 14160739.0
(22) Date de dépôt: 19.03.2014
(51) Int. Cl.: F02M 25/07

(54) **Moteur à réintroduction de gaz d'échappement à répartition homogénéisée des gaz réintroduits**

(30) Priorité: 22.04.2013 FR 1353643
(71) Demandeur: PEUGEOT CITROËN AUTOMOBILES SA, 78140 Velizy-Villacoublay (FR)
(72) Inventeur: Tarallo, Romain, 77700 Bailly Romainvilliers (FR); Novati, Jean, 78420 Carrieres sur Seine (FR); Jan, Marc, 92350 Le Plessis Robinson (FR)

(57) **Abrégé**

L'invention concerne un moteur à combustion de véhicule automobile comprenant une enceinte de stockage intermédiaire (93) des gaz d'échappement émis par au moins un cylindre de combustion (14), l'enceinte (93) présentant une paroi mobile (95) entrainée selon des mouvements cycliques de même cadence que les combustions dudit au moins un cylindre (14).

## Description

L'invention concerne les moteurs à combustion de véhicule automobile dotés d'un système de recirculation des gaz d'échappement issus des cylindres vers l'admission d'air des cylindres. De tels systèmes sont bien connus sous le sigle EGR correspondant à la locution anglo-américaine Exhaust Gaz Recirculation.

On a notamment proposé, dans les moteurs à plusieurs cylindres, de dédier un cylindre à la recirculation des gaz d'échappement, les gaz d'échappement de ce cylindre étant totalement ou partiellement réintroduits dans le collecteur d'admission du moteur.

L'invention concerne notamment les moteurs à réintroduction de gaz d'échappement à l'admission dans lesquels les gaz d'échappement réintroduits à l'admission sont chargés en gaz dihydrogène du fait d'un fonctionnement dans lequel le ou les cylindres fonctionnent avec un mélange air-carburant de type riche.

De tels moteurs sont connus sous l'appellation D-EGR pour Dedicated Exhaust Gaz Recirculation en anglais ou à système dédié de réintroduction ou recirculation de gaz d'échappement en français. Dans de tels moteurs, on réintroduit typiquement les gaz d'échappement d'un seul cylindre vers l'admission. Le concept D-EGR permet de générer des gaz EGR dopés en hydrogène en faisant fonctionner un cylindre en mode riche, avantageusement une richesse de l'ordre de 1,5. L'enrichissement du (des) cylindre(s) dédié(s) entraîne la production de H2, ce qui permet de tolérer encore plus d'EGR et d'augmenter le potentiel d'amélioration du rendement thermodynamique. Cet hydrogène permet d'améliorer la stabilité de la combustion et donc la tolérance à l'EGR.

Le moteur D-EGR permet de réduire les pertes par pompage à l'admission du moteur pour les points de charge partielle, et de repousser la limite à partir de laquelle apparait un cliquetis pour les points de pleine charge. Il est avantageux d'avoir une machine de suralimentation suffisamment performante pour rétablir le débit d'air nécessaire et ainsi conserver voire augmenter les performances du moteur.

La réintroduction des gaz d'échappement à l'admission permet en outre d'améliorer le rendement thermodynamique du moteur de par la réduction des transferts thermiques, le retardement de l'apparition du cliquetis, la diminution de l'enrichissement lié à la température d'échappement, la diminution des pertes par pompage et l'augmentation du taux de compression.

Dans les moteurs à réintroduction de gaz d'échappement, il est nécessaire de s'assurer de l'homogénéité des taux d'EGR cylindre à cylindre. C'est le cylindre présentant le plus faible taux d'EGR qui limitera le potentiel d'amélioration du rendement thermodynamique. Il faut donc s'assurer de répartir équitablement l'EGR entre les cylindres.

De par l'architecture d'un moteur D-EGR où une partie seulement des cylindres voit ses gaz d'échappement réintroduits, l'EGR est délivré à une fréquence beaucoup plus faible que sur un moteur classique. En effet la bouffée EGR est délivrée en seulement x pulsations par cycle moteur, x étant le nombre de cylindre(s) dédié(s), sur y points morts hauts, y étant le nombre de cylindres. Au contraire sur un moteur doté d'un EGR classique, il existe une pulsation EGR par point mort haut. Il en résulte classiquement une distribution temporelle de l'EGR différente entre cylindres dans le cas d'un EGR ayant une partie seulement de ses cylindres dédiés à l'EGR.

On a proposé un système de piquages EGR multiples dans un volume correspondant à une cylindrée moteur dans le document US 2012/0204845. On a également proposé un répartiteur spécifique d'EGR dans le document US 4 131 095. On a également proposé une chambre d'amortissement des pulsations à réglage de position de paroi interne dans le document DE 197 17 846.

Un système de piquages EGR multiples dans un volume correspondant à une cylindrée moteur nécessite un volume important équivalent à une cylindrée unitaire du moteur considéré. Ce volume important est difficilement implantable et impacte le temps de réponse du moteur. Un système à répartiteur est quant à lui difficilement implantable et a un fort impact en termes de pertes par pompage sur le cylindre dédié. Le système à réglage de position de paroi présente lui un résultat limité en termes de répartition des pulsations d'EGR.

Le but de l'invention est de proposer un moteur à réintroduction de gaz d'échappement, notamment un moteur de type D-EGR, lequel présente une répartition des gaz réintroduits qui soit plus homogène sur les différents cylindres de combustion.

Ce but est atteint selon l'invention grâce à un moteur à combustion de véhicule automobile à réintroduction de gaz d'échappement comprenant au moins un cylindre de combustion, un organe d'admission d'air frais en direction d'un ou plusieurs cylindres de combustion et une ligne de réintroduction de gaz d'échappement s'étendant depuis ledit au moins un cylindre de combustion jusqu'à l'organe d'admission, le moteur comprenant une enceinte de stockage intermédiaire des gaz d'échappement émis par ledit au moins un cylindre de combustion laquelle enceinte de stockage intermédiaire est en liaison de gaz avec la ligne de réintroduction de gaz d'échappement, l'enceinte de stockage intermédiaire présentant une paroi mobile, caractérisé en ce que la paroi mobile est entrainée selon des mouvements cycliques de même cadence que les combustions dudit au moins un cylindre dont les gaz d'échappement sont réintroduits dans l'organe d'admission.

Avantageusement, la paroi mobile est une paroi de clôture de l'enceinte de stockage intermédiaire de sorte que la paroi mobile produit un effet de maintien des gaz sous pression dans l'enceinte de stockage intermédiaire par enfermement des gaz dans l'enceinte.

Avantageusement, la paroi mobile est mue sous l'effet d'une pression des gaz d'échappement dans l'enceinte de stockage intermédiaire de telle sorte que le volume de l'enceinte de stockage intermédiaire varie par déplacement de la paroi mobile en fonction de la pression dans l'enceinte de stockage intermédiaire.

Avantageusement, la paroi mobile est en élastomère.

Avantageusement, la paroi mobile fait partie d'une enveloppe en élastomère laquelle est disposée en liaison gazeuse avec la ligne de réintroduction de telle manière que l'enveloppe en élastomère recueille les gaz d'échappement et se dilate sous l'effet d'une pression des gaz d'échappement.

Avantageusement, l'enceinte de stockage intermédiaire comporte une cuve et la paroi mobile est une paroi montée coulissante dans la cuve.

Avantageusement, la paroi mobile présente une première face exposée à une pression de gaz d'échappement et une seconde face en liaison gazeuse avec une conduite d'admission du moteur.

Avantageusement, le moteur comporte un turbocompresseur et ladite conduite d'admission est mise sous pression par le turbocompresseur.

Avantageusement, le moteur présente un vilebrequin et la paroi mobile est entrainée en déplacement par le vilebrequin.

Avantageusement, le moteur comporte au moins un cylindre dont les gaz d'échappement sont entièrement réintroduits dans l'organe d'admission et il comporte au moins un cylindre dont au moins une partie des gaz d'échappement est rejetée dans l'air ambiant sans passer par un cylindre de combustion.

Avantageusement, ledit au moins un cylindre dont des gaz d'échappement sont réintroduits dans l'organe d'admission est un cylindre à fonctionnement à richesse supérieure à 1 de sorte qu'il produit des gaz d'échappement chargés en hydrogène.

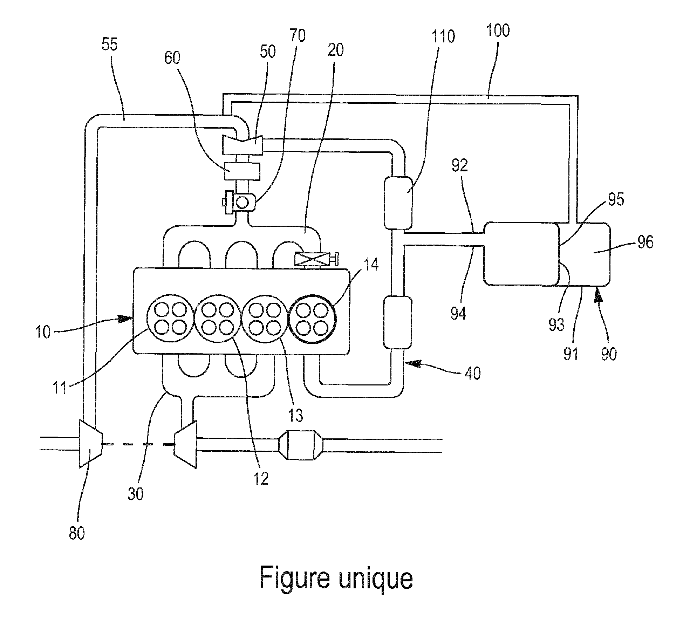

D'autres caractéristiques, buts et avantages de l'invention apparaitront à la lecture de la description détaillée qui va suivre, faite en référence à la figure unique annexée qui représente un moteur selon un mode de réalisation de l'invention.

Le moteur représenté sur la figure est un moteur à essence de type quatre-temps suralimenté fonctionnant en D-EGR. Ce moteur comporte un bloc-moteur 10 muni de quatre cylindres 11, 12, 13, 14. Le moteur comporte en outre un collecteur d'admission 20 débouchant dans chacun des cylindres 11, 12, 13 14 par une conduite d'admission respective. Un collecteur d'échappement 30 collecte en outre les gaz d'échappement émanant de chacun des cylindres 11, 12 et 13.

Le cylindre 14 est lui associé à un circuit 40 de réintroduction de gaz d'échappement à l'admission. Ainsi le circuit 40 prélève les gaz d'échappement du cylindre 14 et les dirige vers l'admission du moteur. Plus spécifiquement, les gaz d'échappement du cylindre 14 sont véhiculés par le circuit 40 vers le collecteur d'admission 20 en passant à travers un mélangeur 50 où les gaz d'échappement sont mélangés avec l'air frais arrivant par une conduite d'admission 55. Les gaz d'échappement sont ensuite véhiculés à travers un échangeur thermique intermédiaire 60 ou intercooler selon la terminologie anglo-saxonne puis une valve d'admission 70 ou throttle selon la terminologie anglo-saxonne.

Le présent moteur comporte en outre un turbocompresseur 80 entrainé par les gaz d'échappement émanant des cylindres 11, 12 et 13 et mettant en pression un flux d'air frais lequel arrive à l'admission du moteur une fois compressé.

Le cylindre 14 est ici un cylindre de type D-EGR. Un module de contrôle du moteur pilote une alimentation en air et/ou en carburant du cylindre 14 de telle sorte que le cylindre 14 est le siège d'une combustion à mélange riche, c'est-à-dire en excès de carburant par rapport à l'air, ici selon une richesse d'environ 1,5. De par la richesse du mélange air-carburant, le cylindre 14 produit du gaz dihydrogène H2. Le gaz H2 ainsi produit se retrouve dans les gaz d'échappement émis par le cylindre 14 lesquels sont ensuite, selon le principe du moteur D-EGR, réintroduits à l'admission d'au moins un cylindre du moteur, ici à l'admission de l'ensemble des cylindres 11 à 14. Le moteur selon le présent exemple de réalisation ne comporte qu'un seul cylindre dont les gaz d'échappement sont réintroduits à l'admission, lequel produit de l'hydrogène selon le principe D-EGR. En variante le moteur peut en comporter plusieurs.

Sur le circuit 40 de réintroduction de gaz d'échappement à l'admission se trouve un dispositif 90 permettant de régler la distribution temporelle d'un débit EGR pulsé. Ce dispositif comprend une cuve 91 dans laquelle peuvent pénétrer les gaz d'échappement provenant de la chambre de combustion 14, ces gaz d'échappement pouvant ensuite ressortir de cette cuve 91 pour atteindre le collecteur d'admission 20.

La cuve 91 est ici piquée latéralement sur le circuit 40 de réintroduction des gaz par une embouchure 92. La cuve 91, en matière rigide ici en matériau métallique, est munie intérieurement d'une enveloppe en élastomère 93 laquelle présente une embouchure 94 placée sur l'embouchure 92 de la cuve 91.

L'enveloppe 93 présente ainsi une paroi 95 laquelle délimite une partie de la cuve laquelle est occupée par l'enveloppe 93 et une partie 96 de la cuve 91 laquelle n'est pas occupée par l'enveloppe 93. La paroi 95 de l'enveloppe 93 forme donc ici une paroi mobile d'une enceinte de stockage intermédiaire constituée par l'enveloppe 93.

Ainsi, dans un état initial d'échappement du cylindre dédié 14, des soupapes d'échappement du cylindre dédié 14 s'ouvrent et les gaz EGR s'écoulent dans le circuit de réintroduction 40 sous la forme d'un pic de débit sous haute pression. L'enveloppe 93 est alors en position de repos. Dans un état consécutif, il se produit un remplissage de l'enveloppe 93 sous l'effet de la pulsation EGR. L'enveloppe 93 augmente de volume en absorbant la pulsation de pression due à l'EGR. La pression de la pulsation EGR est alors amortie. Ensuite il se produit une vidange de la pulsation EGR par l'enveloppe 93. L'enveloppe diminue de volume progressivement. La pulsation EGR est lissée et le débit EGR est constant au niveau du mélangeur 50 formant piquage de réintroduction.

En d'autres termes, la cuve 91 forme un volume tampon dans lequel se trouve un poumon constitué par l'enveloppe 93 qui va absorber le pic de pression lié à la pulsation EGR en augmentant de volume lors de cette pulsation EGR. Après un tel pic de pression, l'enveloppe 93 reprend son volume initial et redistribue la pulsation EGR à la vitesse souhaitée. La paroi mobile 95 constituée est donc entrainée dans le présent fonctionnement selon des mouvements cycliques imprimés par la pression des gaz lesquels sont cadencés par les combustions du cylindre 14.

La vitesse de vidange peut être liée à l'élasticité de l'enveloppe ou encore à un ressort de rappel disposé dans la cuve 91 à l'extérieur de l'enveloppe 93. Le ressort forme alors un amortisseur mécanique qui assiste le poumon formé par l'enveloppe 93 en gérant la vitesse de déplacement de l'enveloppe. Un tel ressort est préférentiellement taré pour que règne la pression souhaitée dans l'enveloppe 93. Le tarage du ressort sera défini suivant la vitesse de vidange désirée de l'enveloppe.

La vitesse de vidange peut également être liée à une électrovanne de pression du volume tampon disposée avantageusement dans la cuve 91 à l'opposé de l'embouchure 94 par rapport à l'enveloppe 93. L'électrovanne forme alors un amortisseur pneumatique qui, en gérant la pression du volume 96 externe à l'enveloppe 93, assiste l'enveloppe en gérant sa vitesse de déplacement aussi bien au remplissage qu'à la vidange.

Dans le présent mode de réalisation, une conduite de circulation 100 relie la cuve 91, dans sa partie 96 située en dehors de l'enveloppe 93, c'est-à-dire au-delà de la paroi mobile 95 à l'opposé de l'embouchure 94, à la conduite d'admission 55. La conduite de circulation 100 transmet en face extérieure de l'enveloppe 93 une pression laquelle est présente dans la conduite d'admission 55 en raison de la présence du turbocompresseur 80. Cette pression exerce un effort de retour sur l'enveloppe 93 vers son état initial à volume minimal. Ce mode de réalisation, du fait qu'il ne fait appel à aucun élément mécanique pour produire l'effort de rappel de l'enveloppe 93, est particulièrement fiable au vieillissement et ne nécessite aucune surveillance ni maintenance.

Le dispositif décrit ici est composé de différents matériaux. L'enveloppe 93 est réalisée en élastomère. Cet élastomère doit résister à la température et à la composition des gaz d'échappement réintroduits. Cet élastomère doit être élastique afin de pouvoir se gonfler et se dégonfler.

La cuve 91 est ici métallique. Le métal utilisé doit résister aux conditions de température et de pression d'utilisation. Le ressort additionnel, lorsqu'il est adopté, peut être métallique. Le métal constituant le ressort doit également résister aux conditions de température et de pression d'utilisation.

Un tel dispositif peut être positionné à différents endroits du circuit de réintroduction des gaz d'échappement. Si les composants d'un tel dispositif sont compatibles avec la température des gaz d'échappement, il peut être placé en amont d'un échangeur thermique EGR tel que celui représenté ici sous la référence 110. Si les composants du dispositif ne sont pas compatibles avec la température des gaz d'échappement, un tel réservoir peut être placé en aval d'un échangeur thermique EGR tel que l'échangeur 110 afin que les gaz EGR soient refroidis avant d'atteindre le dispositif 90.

Selon une variante de l'invention, l'enveloppe 93 peut être remplacée par un piston coulissant, lequel sépare la cuve 91 en un volume variable de réception des gaz d'échappement et un volume d'amortissement qui est le complémentaire du volume de réception des gaz. Le piston coulissant forme alors une paroi mobile d'une enceinte de stockage intermédiaire des gaz d'échappement, laquelle paroi est également mobile d'une manière cadencée sur les combustions du cylindre 14 de manière à amortir les pulsations d'EGR. Un tel piston peut être disposé de manière coulissante dans la cuve 91 sans présenter de tige de piston, auquel cas le piston présente préférentiellement une épaisseur suffisante dans la direction de son coulissement pour éviter qu'il ne se positionne en biais par rapport à sa position de coulissement. En variante on adopte, en remplacement d'un tel piston, une soupape montée sur une tige coulissante, dont la tête forme à nouveau une paroi mobile d'une enceinte de stockage intermédiaire des gaz. En variante encore, on adopte en remplacement de l'enveloppe 93 une membrane déformable fixée par ses bords à la cuve 91, la membrane formant alors une paroi mobile afin de délimiter un volume variable de stockage intermédiaire des gaz d'échappement. En variante encore une telle membrane peut être montée coulissante dans la cuve 91.

Dans ces différents modes de réalisation, la paroi mobile de l'enceinte de stockage intermédiaire des gaz d'échappement est entrainée par la pression variable des gaz d'échappement dans la conduite de réintroduction de ceux-ci à l'admission. En variante, la paroi mobile de l'enceinte de stockage intermédiaire des gaz est entrainée en déplacement cyclique par un organe mécanique du moteur. Ainsi, la paroi mobile peut être configurée sous la forme d'un piston lequel est entrainé en va-et-vient par le vilebrequin du moteur par exemple par l'intermédiaire d'une bielle reliant le vilebrequin à ce piston. Là encore, par un réglage approprié, les gaz d'échappement sont amortis puis renvoyés vers l'admission d'une manière plus souple.

Ces différents modes de réalisation permettent d'améliorer la répartition temporelle de la pulsation EGR et de s'affranchir du risque de disparité de taux de gaz d'échappement réintroduit de cylindre à cylindre. Ces différents modes de réalisation sont particulièrement avantageux lorsqu'un ou plusieurs cylindres sont dédiés à la production d'EGR, ces cylindres n'échappant pas dans le collecteur d'échappement mais seulement dans l'admission.

L'invention permet de fournir un débit de gaz réintroduit constant à partir d'un débit de gaz pulsé. Le coût de la mise en oeuvre de tels dispositifs reste réduit. Le système basé sur l'utilisation d'un poumon ou d'une membrane ne nécessite pas de contrôle. Ces différents modes de réalisation ont par ailleurs l'avantage que les opérations de remplissage et de vidange de l'enceinte de stockage intermédiaire s'effectuent sans pénalité en termes de pompage sur le cylindre dédié à la recirculation.

L'invention permet en outre de répondre au risque en termes de pompage de compresseur lié à la pulsation des gaz réintroduits laquelle pulsation annule quasiment le débit compresseur lors de l'échappement du cylindre dédié. L'invention permet de fournir un débit de gaz EGR constant à partir d'un débit de gaz pulsé, le débit compresseur restant constant.

## Revendications

1. Moteur à combustion de véhicule automobile à réintroduction de gaz d'échappement comprenant au moins un cylindre de combustion (14), un organe d'admission d'air frais (20) en direction d'un ou plusieurs cylindres de combustion (11,12,13,14) et une ligne de réintroduction de gaz d'échappement (40) s'étendant depuis ledit au moins un cylindre de combustion (14) jusqu'à l'organe d'admission (20), le moteur comprenant une enceinte de stockage intermédiaire (93) des gaz d'échappement émis par ledit au moins un cylindre de combustion (14) laquelle enceinte de stockage intermédiaire (93) est en liaison de gaz avec la ligne de réintroduction de gaz d'échappement (40), l'enceinte de stockage intermédiaire (93) présentant une paroi mobile (95), **caractérisé en ce que** la paroi mobile (95) est entrainée selon des mouvements cycliques de même cadence que les combustions dudit au moins un cylindre (14) dont les gaz d'échappement sont réintroduits dans l'organe d'admission (20).

2. Moteur à combustion selon la revendication 1, **caractérisé en ce que** la paroi mobile (95) est une paroi de clôture de l'enceinte de stockage intermédiaire (93) de sorte que la paroi mobile (95) produit un effet de maintien des gaz sous pression dans l'enceinte de stockage intermédiaire (93) par enfermement des gaz dans l'enceinte (93).

3. Moteur à combustion selon la revendication 2, **caractérisé en ce que** la paroi mobile (95) est mue sous l'effet d'une pression des gaz d'échappement dans l'enceinte de stockage intermédiaire (93) de telle sorte que le volume de l'enceinte de stockage intermédiaire (93) varie par déplacement de la paroi mobile (95) en fonction de la pression dans l'enceinte de stockage intermédiaire (93).

4. Moteur à combustion selon l'une quelconque des revendications précédentes, **caractérisé en ce que** la paroi mobile (95) est en élastomère.

5. Moteur à combustion selon la revendication précédente, **caractérisé en ce que** la paroi mobile (95) fait partie d'une enveloppe en élastomère (93) laquelle est disposée en liaison gazeuse avec la ligne de réintroduction (40) de telle manière que l'enveloppe en élastomère (93) recueille les gaz d'échappement et se dilate sous l'effet d'une pression des gaz d'échappement.

6. Moteur à combustion selon l'une quelconque des revendications 1 à 4, **caractérisé en ce que** l'enceinte de stockage intermédiaire comporte une cuve (91) et la paroi mobile (95) est une paroi montée coulissante dans la cuve (91).

7. Moteur à combustion selon l'une quelconque des revendications précédentes, **caractérisé en ce que** la paroi mobile (95) présente une première face exposée à une pression de gaz d'échappement et une seconde face en liaison gazeuse (100) avec une conduite d'admission du moteur (55).

8. Moteur à combustion selon la revendication précédente, **caractérisé en ce qu'**il comporte un turbocompresseur (80) et ladite conduite d'admission (55) est mise sous pression par le turbocompresseur (80).

9. Moteur à combustion selon l'une quelconque des revendications 1, 2 ou 6, **caractérisé en ce que** le moteur présente un vilebrequin et la paroi mobile (95) est entrainée en déplacement par le vilebrequin.

10. Moteur à combustion selon l'une quelconque des revendications précédentes, **caractérisé en ce que** le moteur comporte au moins un cylindre (14) dont les gaz d'échappement sont entièrement réintroduits dans l'organe d'admission (20) et il comporte au moins un cylindre (11,12,13) dont au moins une partie des gaz d'échappement est rejetée dans l'air ambiant sans passer par un cylindre de combustion.

11. Moteur à combustion selon l'une quelconque des revendications précédentes, **caractérisé en ce que** ledit au moins un cylindre (14) dont des gaz d'échappement sont réintroduits dans l'organe d'admission (20) est un cylindre à fonctionnement à richesse supérieure à 1 de sorte qu'il produit des gaz d'échappement chargés en hydrogène.
